# EUROPEAN PATENT APPLICATION

(11) **EP 0 831 482 A2**
(43) Date of publication of application: **25.03.1998**
(21) Application number: 97306368.8
(22) Date of filing: 20.08.1997
(51) Int. Cl.: G11B 20/12, G11B 27/30

(54) **Method and apparatus for data storage**

(30) Priority: 24.09.1996 EP 96306934
(71) Applicant: Hewlett-Packard Company, Palo Alto, California 94304 (US)
(72) Inventor: Watkins, Mark, Westbury Park, Bristol BS6 7SR (GB); Langford, Stephen, Littleton-Upon-Severn, Bristol BS12 1MW (GB)
(74) Representative: Lawman, Matthew John Mitchell

(57) **Abstract**

According to the present invention there is provided apparatus for reading and writing data to a storage medium, wherein data is divided into fragments of predetermined length and each fragment comprises a marker, the apparatus comprising:
means for detecting markers;
means for extrapolating from the position of known markers to establish the position of an undetected marker.

The present invention reduces the likelihood of data being unrecoverable as a result of unidentifiable marker patterns. Where a marker pattern is not detected, but a previous marker pattern within the data track has been successfully detected, the position of the missing marker is extrapolated from the position of the previous marker, using a knowledge of the relative spacing of markers which is predetermined by the data interchange format.

In the embodiment to be described, each data fragment comprises a header containing ancillary information wherein the headers of the data fragments comprise the markers.

Preferably, the extrapolation is done from the position of already-detected markers. to establish the position of subsequently undetected markers. Optionally, the extrapolation may be done in reverse from the position of subsequently-detected markers to establish the position of previously undetected markers.

The apparatus may comprise means for setting a limit on the number of consecutively undetected markers whose position will be established by extrapolating from the position of a known marker.

## Description

### Technical Field

This invention relates to methods and apparatus for data storage, and particularly, though not exclusively, to methods and apparatus for reading of data from elongate magnetic tape media in a helical scan tape drive.

### Background Art

It is already known to provide reliable storage and retrieval of large volumes of digital data, such as computer data, in particular by means of the DDS (Digital Data Storage) format defined in ISO/IEC Standard 10777:1991 E and implemented in helical scan tape drives made by several companies.

In the DDS system an elongate recording media comprising tape coated with a magnetic medium is moved by a motor-driven capstan along a path wrapped partially around a transducer comprising a rotating drum carrying one or more electromagnetic heads. The plane of rotation of the drum is disposed at an angle to the plane of movement of the tape, so that each head traverses the tape along successive tracks extending across the width of the tape at an angle to its centreline.

Typically the precise location of each track is determined during recording of data on the tape by the position relative to the tape of write heads on the drum. To ensure optimum retrieval of data from the tape, it is desirable for read heads on the drum to follow paths across the tape which are at essentially identical positions to those followed by the write heads during data recording. This in turn requires control during data retrieval of relative motion between the tape and the drum, by controlling rotation of the drum and/or controlling movement of the tape by the capstan.

In helical scan data storage devices, it is common practice for the data track to be subdivided into one or more units of predetermined length, the start of each of the said units being marked by one or more specific data patterns which are reserved for this purpose. Such marker patterns are needed for synchronisation of the decoding and interpretation of the signal from the read head(s). A typical helical scan storage device recovers each of the said units from the signal from the read head(s) by awaiting the occurrence of the said marker pattern. A benefit of such a scheme is that the position of each unit within the data track may be unambiguously determined without the need to refer to the position(s) of unit(s) occurring earlier in the track, therefore if a defect in the recording medium or other cause of distortion of the read signal causes a marker to be unidentifiable, only a limited amount of data is rendered unrecoverable.
The present invention aims to reduce the likelihood of data being unrecoverable as a result of unidentifiable marker patterns.

### Disclosure of Invention

According to the present invention there is provided apparatus for reading and writing data to a storage medium, wherein data is divided into fragments of predetermined length and each fragment comprises a marker, the apparatus comprising:
means for detecting markers;
means for extrapolating from the position of known markers to establish the position of an undetected marker.

The present invention reduces the likelihood of data being unrecoverable as a result of unidentifiable marker patterns. Where a marker pattern is not detected, but another marker pattern within the data track has been successfully detected, the position of the missing marker is extrapolated from the position of the previous marker, using a knowledge of the relative spacing of markers which is predetermined by the data interchange format.

Having determined the location of a missing marker, the data fragment associated with the marker can be processed as if the marker had been originally detected.

Hitherto, only fragment data having an associated detected marker has been recovered, with the result that fragment data associated with a lost marker would have remained unrecovered.

Advantageously, the apparatus reads fragment data from the storage medium irrespective of whether or not a marker is detected and, if necessary, determines the position of the marker by extrapolation in order to recover the fragment data.

In the embodiment to be described, each data fragment comprises a header containing ancillary information wherein the headers of the data fragments comprise the markers.

Preferably, the extrapolation is done from the position of already-detected markers to establish the position of subsequently undetected markers. Optionally, the extrapolation may be done in reverse from the position of subsequently-detected markers to establish the position of previously undetected markers. Such 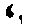 reverse 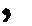 extrapolation is particularly useful where the first marker(s) in a series of markers is missing.

The apparatus may comprise means for setting a limit on the number of consecutively undetected markers whose position will be established by extrapolating from the position of a known marker. A suitable limit, which has been shown to provide good general data recovery, is sixteen. However, the limit may vary to some extent depending on the type of apparatus or application to which the scheme is applied.

Further aspects and advantages of the present invention will become apparent from the following description and claims.

### Brief Description of Drawings

An embodiment of the present invention will now be described, by way of example, with reference to the accompanying drawings, in which:
- Figure 1: is a diagram illustrating the main physical components of a tape deck employing helical scan recording;
- Figure 2: is a diagrammatic representation of two data tracks recorded on tape using helical scan recording;
- Figure 3: is a diagrammatic representation of the format of a main data area of a data track;
- Figure 4: is a block diagram of the main components of the data storage apparatus;
- Figure 5: is a schematic diagram of track following circuits forming part of the apparatus of Figure 4;
- Figure 6: illustrates the principle of header extrapolation used in the invention;

### Best Mode for Carrying Out the Invention, & Industrial Applicability

The data storage apparatus now to be described utilizes a helical scan technique for storing data in oblique tracks on a recording tape in a format similar to that used for the storage of PCM audio data according to the DAT Conference Standard (June 1987, Electronic Industries Association of Japan, Tokyo, Japan). The present apparatus is, however, adapted for storing computer data rather than digitized audio information.

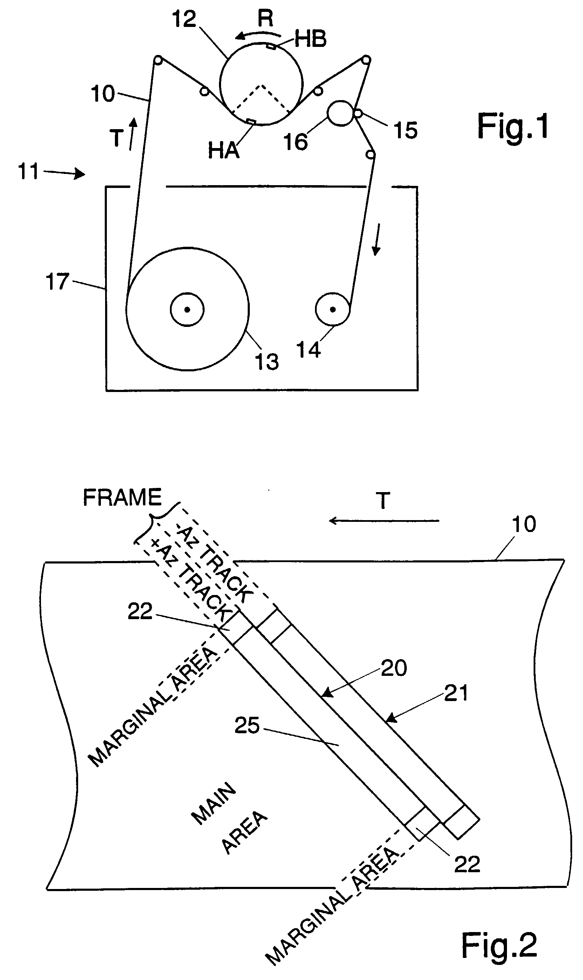

Figure 1 shows the basic layout of a helical-scan tape deck 11 in which tape 10 from a tape cartridge 17 passes at a predetermined angle across a rotary head drum 12 with a wrap angle of approximately 90°. In operation, the tape 10 is moved in the direction indicated by arrow T from a supply reel 13 to a take-up reel 14 by rotation of a capstan 15 against which the tape is pressed by a pinch roller 16; at the same time, the head drum is rotated in the sense indicated by arrow R. The head drum 12 houses two read/write heads HA, HB angularly spaced by 180°. In known manner, these heads HA, HB are arranged to write overlapping oblique tracks 20, 21 respectively across the tape 10 as shown in Figure 2. The track written by head HA has a positive azimuth while that written by head HB has a negative azimuth. Each pair of positive and negative azimuth tracks, 20, 21 constitutes a frame.

The basic format of each track as arranged to be written by the present apparatus Is illustrated in Figure 2. Each track comprises two marginal areas 22 and a main area 25. The main area 25 is used to store data provided to the apparatus (main data), together with certain auxiliary information. The items of auxiliary information are known as sub codes and relate, for example, to the logical organization of the main data, its mapping onto the tape, certain recording parameters (such as format identity, tape parameters etc.), and tape usage history. The main area 25 also includes synchronization bytes ('sync bytes') which enable the boundaries between successive data bytes stored on the tape to be identified, and which are also used to generate timing signals for controlling tape movement so that the heads HA, HB follow the tracks accurately, by measuring the time interval between signals indicative of the drum position and reference signals including the sync bytes.

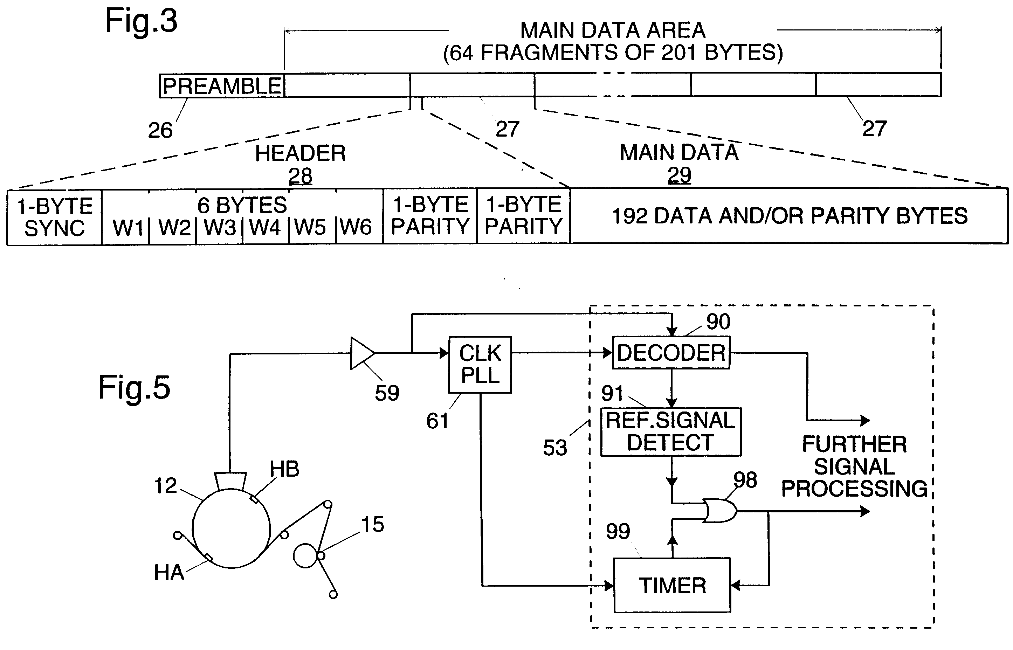

The data format of the main area 25 of a track is illustrated in Figure 3. The main area is composed of a pre-amble block 26, followed by sixty-four sections or 'fragments' 27 each two hundred and one bytes long. The block 26 is a pre-amble which contains timing data patterns to facilitate timing synchronization on playback. The fragments 27 make up the 'Main Data Area'. Each fragment 27 in the Main Data Area comprises a nine-byte 'Header' region 28 and a one hundred and ninety-two byte 'Main Data' region 29, the compositions of which are shown in the lower part of Figure 3.

The Header region 28 is composed of a sync byte as mentioned above, six information-containing bytes W1 to W6, and two parity bytes. The first information byte W1 contains a six-bit Fragment ID which identifies the fragment within the main area 25. Byte W2 contains an Area ID sub code in its four most significant bits, and a frame number in its four least significant bits which is incremented mod 16 between consecutive frames. Bytes W3 to W6 contain sub codes providing information about the contents of the track and the history of usage of the tape. The parity bytes comprise a sixteen-bit cyclic redundancy check (CRC) code derived from the contents of the remainder of the Header region.

The Main Data region 29 of each fragment 27 is composed of one hundred and ninety-two bytes (comprising six successive thirty-two byte blocks) generally constituted by main data and/or main-data parity. However, it is also possible to store sub codes in the Main Data region if desired.

In summary, main data are stored in the Main Data regions 29 of the Main Data Area fragments 27 of each track, while sub codes can be stored both in the Header and Main Data regions 28, 29 of Main Data Area fragments 27.

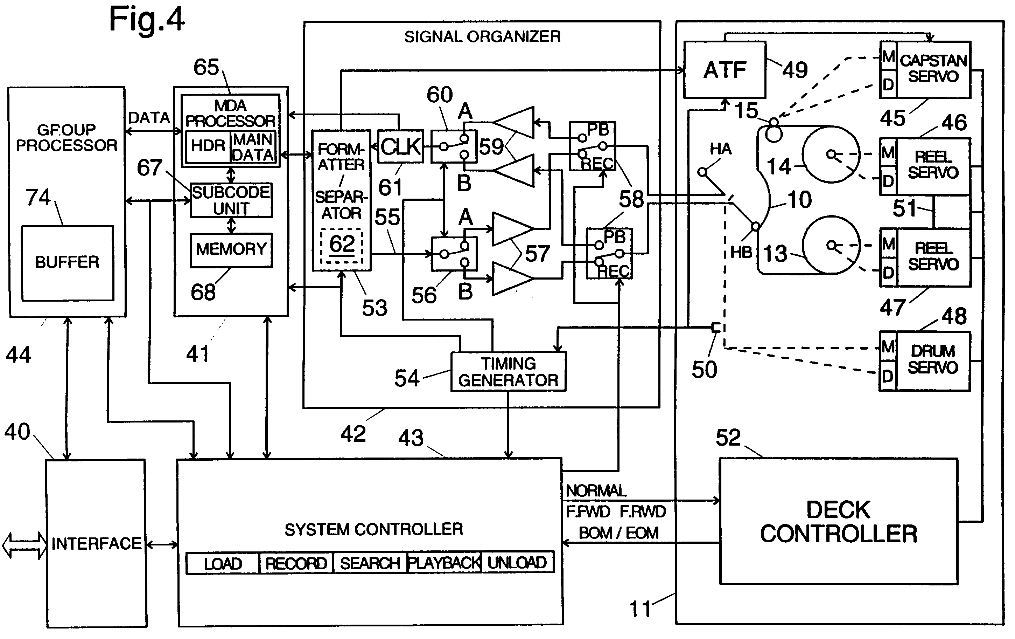

Figure 4 is a block diagram of the data storage apparatus in its entirety including the tape deck 11 already described in part with reference to Figure 1. In addition to the tape deck, the apparatus includes an interface unit 40 for interfacing the apparatus with a computer (not shown); a group processor 44 and a frame data processor 41 for processing main data and sub codes into and out of a Main Data Area fragment 27; a signal organizer 42 for composing/decomposing the signals for writing/reading a track and for appropriately switching the two heads HA, HB; and a system controller 43 for controlling the operation of the apparatus in response to commands received from a computer via the interface unit 40. Each of the main component units of the apparatus will be further described below.

The data storage apparatus is arranged to respond to commands from a computer to load/unload a tape, to store a data record and other logical segmentation marks, to search for a selected record using the segmentation marks, and to read back the next record.

The interface unit 40 is arranged to receive the commands from the computer and to manage the transfer of data records and logical data segmentation marks between the apparatus and computer. Upon receiving a command from the computer, the unit 40 passes it on to the system controller 43 which, in due course will send a response back to the computer via the unit 40 indicating compliance or otherwise with the original command. Once the apparatus has been set up by the system controller 43 in response to a command from the computer to store or read data, then the interface unit 40 will also control the passage of records and segmentation marks between the computer and the group processor 44.

During data storage the group processor 44 is arranged to segment the main data provided to it in the form of data records into data packages each containing an amount of data corresponding to a fixed number (group) of frames (for example, twenty two). This segmentation is effected without regard to the logical organization of the data (that is, how it is divided into records). Information regarding the logical segmentation of the data (record divisions, file marks) is stored in an index which is generated by the processor 44 and which forms the last portion of data making up a group. The processor 44 also generates certain sub codes whose contents are group-dependent or concern the logical segmentation of data. To facilitate these tasks and the transfer of data to and from the processor 44, the latter is provided with a large buffer 74 which is arranged to hold several (for example, three) group's worth of data.

Once a group, including its index, has been assembled, it is transferred a frame at a time to the frame data processor 41. Conceptually there is no need for the frame data processor 41 to be aware of the grouping of frames as the group processor 44 could simply pass it a frame's worth of main data at a time together with the appropriate sub codes. However, in order to speed the transfer of data between the processors 44 and 41, it is advantageous for the frame data processor 41 to be managed in terms of groups for receiving data from the processor 44 - in other words, during recording of data, the processor 41 is told by the group processor 44 when a group is ready for processing after which the processor 41 accesses the frames of the group autonomously from the buffer 74.

When data are being read from tape, the group processor 44 is arranged to receive main data from the processor 41 on a frame-by-frame basis, the data being written into the buffer 74 in such a manner as to build up a group. The group processor 44 can then access the group index to recover information on the logical organization (record structure, file marks) of the main data in the group. Using this information the group processor can pass the requested record or segmentation mark to the computer via the interface unit 40.

To facilitate the assembly of frame data back into a group's worth of data, each frame can be tagged with an in-group sequence number when the frame is written to tape. This in-group number can be provided as a sub code that, for example, is included at the head of the Main Data region of the first fragment in the Main Data Area of each track of a frame. The sub code is used on playback to determine where the related frame data are placed in the buffer 74 when passed to the group processor 44.

The frame data processor 41 functionally comprises a Main-Data-Area (MDA) processor 65 and a sub code unit 67 with an associated electronic memory 68 for tape usage data (in practice, these functional elements may be constituted by a single microprocessor running appropriate processes under program control).

The sub code unit 67 is arranged to provide sub codes to the processor 65 as required during recording and to receive and distribute sub codes from the processor 65 during playback. Dependent on their information contents, sub codes may be generated/required by the group processor 44 or the system controller; the Area ID sub code is, for example, determined by/used by the controller 43. In the case of non-varying sub codes such as certain recording parameters, the sub codes may be permanently stored in the unit 67. Furthermore, frame-dependent sub codes such as absolute frame number, may conveniently be generated by the sub code unit 67 itself.

With regard to the tape usage sub codes, these are read off from the system area of a tape upon first loading and stored by the unit 67 in the memory 68. During a tape usage session, the tape usage data held in the memory 68 are updated by the unit 67 as appropriate on the basis of inputs received from the processors 44, 65 and the controller 43; thus if a record is kept of the number of main data frames read/written (either directly or in terms of the number of groups read and written), then these data must be continually updated by the unit 67 as a result of inputs from the processor 65 (or possibly the processor 44 if groups are counted). At the end of a tape usage session, the contents of the memory 68 are stored to tape within a log area of the tape system area, the latter being rewritten at the end of each session of usage. The multiple storage of the tape usage sub codes within the log area together with associated parity information, ensures a very high probability that the tape usage sub codes can be read back from the tape even in the presence of tape defects or other similar degradations.

The MDA processor 65 is arranged to process a frame's worth of main data at a time together with the associated sub codes in the fragment Header regions. Thus during recording, the processor 65 receives a frame's worth of main data from the group processor 44 together with sub codes from the unit 67. On receiving the main data the processor 65 interleaves the data, and calculates error correcting codes and parity values, before assembling the resultant data and sub codes to output the Main-Data-Area fragments for the two tracks making up a frame. Before assembling the main data with the sub codes, scrambling (randomizing) of the data may be effected to ensure a consistent RF envelope independent of the data contents of a track signal.

During playback, the processor 65 effects a reverse process on the two sets of Main-Data-Area fragments associated with the same frame. Unscrambled, error-corrected and de-interleaved main data are passed to the group processor 44 and sub codes are separated off and distributed by the unit 67 to the processor 44 or system controller 43 as required. Each fragment in a frame is retrieved and processed in this way irrespective of whether or not its respective fragment header is detected, subject to there being not more than a predetermined number of consecutive missing fragment headers, as described below in more detail.

The signal organizer 42 comprises a formatter/separator unit 53 which during recording (data writing) is arranged to assemble Main-Data-Area fragments provided by the frame data processor 41, to form the signal, including sync bytes, to be recorded on each successive track. The formatter/separator unit 53 comprises an extrapolator circuit 62 as will be described in detail. The necessary preamble patterns are also inserted into the track signals where necessary by the unit 53. Timing signals for coordinating the operation of the unit 53 with rotation of the heads HA, HB are provided by a timing generator 54 fed with drum position signals output by a pulse generator 50 responsive to head drum rotation and located in the tape deck 11. The track signals output on line 55 from the unit 53 are passed alternately to head HA and head HB via a head switch 56, respective head drive amplifiers 57, and record/playback switches 58 set to their record positions by the system controller 43. The head switch 56 is operated by appropriate timed signals from the timing generator 54.

During playback (data reading) the track signals alternately generated by the heads HA and HB are fed via the record/playback switches 58 (now set by the system controller 43 to their playback positions), respective read amplifiers 59, a second head switch 60, and a clock recovery circuit 61, to the input of the formatter/separator unit 53. The operation of the head switch 60 is controlled in the same manner as that of the head switch 56. The unit 53 now serves to generate signals indicating the timing of the Header regions (incorporating the sync bytes) of data fragments in the track signals, to supply the timing signals to an ATF circuit 49 in the tape deck 11, to synchronise the subsequent decoding of the data and to pass the Main-Data-Area fragments to the frame data processor 41. Clock signals are also passed to the processor 41 from the clock recovery circuit 61. If for some reason the header of a particular fragment is not detected, for example it has been corrupted due to tape damage or noise, the timing for the fragment for purposes such as decoding simply follows on from the timing of the previous fragment. Thus, data can be recovered and decoded even when a fragment header is missing for whatever reason.

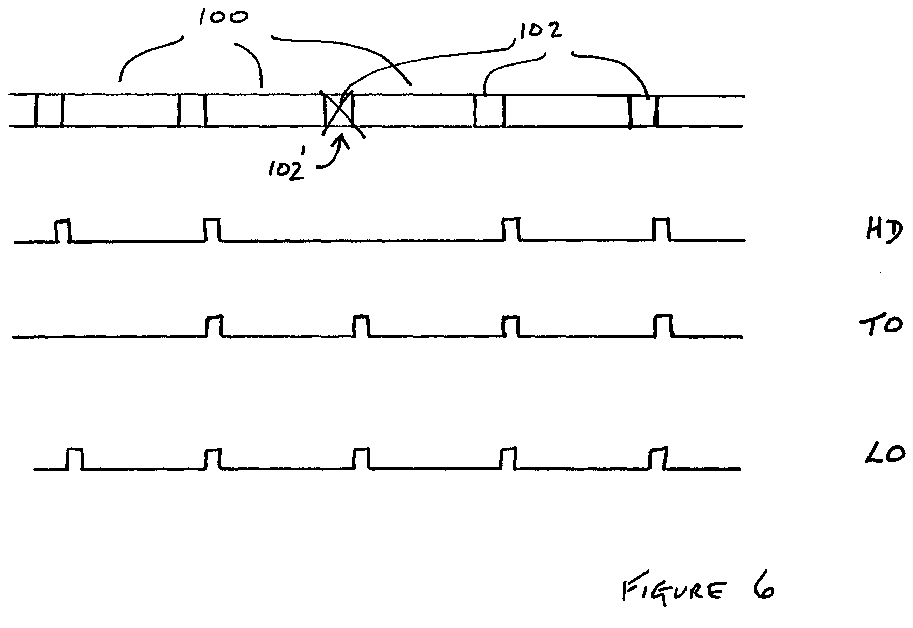

The track following circuits are shown in more detail in Figure 5. Referring to Figure 5 (from which the head and record/playback switches have been omitted for clarity) and as described above, the track signals from the heads HA and HB are fed via the amplifier stage 59 to the clock recovery circuit 61 and to the formatter/separator unit 53. The circuit 61, which incorporates a phase-locked loop, provides the unit 53 with a clock signal, which is received together with the track signals by a decoder 90. Decoded signals are in turn supplied to a reference signal detector 91. The detector 91 identifies fragment Headers containing reference signals in the form of sync bytes in each track, and supplies a pulse at the time of detection of these reference signals to an exclusive-OR gate 98, the other input to which is supplied from a timer 99. Together, the exclusive-OR gate 98 and the timer 99 make up the extrapolation circuit 62 shown in Figure 4 as part of the formatter/separator 53. The timer 99 is referenced to the clock recovery from the data by connection to the circuit 61. The timer is started by feedback from the output of the exclusive-OR gate 98 on detection of the first header in a track.

Figure 6 illustrates the situation where a header is missed. This could be due to a defect in the tape medium or other cause of short term data loss. The recorded data is shown as sections of user data 100 intersected by headers 102. A header 102 together with the following section of user data 100 is a data fragment in the main data area referred to in Figure 3. A particular header 102' is unreadable, as indicated by being crossed through.

Below the recorded data in Figure 6 are timing diagrams referenced as follows:
HD - header detect pulses from the reference signal detector 91;
TO - output from the timer 99 which supplies pulses once the first header in a track has been detected;
LO - the logical-OR of the HD and TO signals.

In this case, the extrapolation circuit 62 provides a timer pulse to replace the missing header pulse.

If more than one header 102 is missed, the extrapolation circuit supplies pulses accordingly to replace the missing header pulses. However, since missing several headers indicates the existence of a potentially serious problem, most manufacturers will wish to set a maximum limit for the number of consecutively missed header pulses which will be replaced by pulses from the timer 99. A suitable default limit, which has been found to provide good general performance, is sixteen. The limit, however, can be programmed to a different value is necessary.

Furthermore, the invention can be implemented so as to extrapolate back from detected header pulses to reconstitute a pulse from a previously missed header. This feature can be implemented by delaying the data read from tape by one or more fragments.

The ability of the storage device of the present embodiment to recover previously unrecoverable data fragments is derived in part by its ability to read and store fragment data even in the absence of a header sync pulse, or marker. Having stored the fragment data, the location of sync pulse is derived by extrapolation from previously recovered sync pulses. Then, the location of the data in the fragment header and the subsequent 192 data and/or parity bits, which follow the sync pulse, can be derived and the data can be processed and recovered as normal. In the present embodiment, data reading continues beyond the end of a recovered data fragment and, if the next expected sync pulse is not detected, reading continues until either: a sync pulse for a subsequent fragment is detected; or, the number of consecutive missing headers exceeds a pre-determined threshold. In the former case, the location of the undetected sync pulse can be derived using extrapolation, thereby facilitating recovery of the data from the respective fragment. In the latter case, some form of appropriate error message is returned to the host computer.

Prior art storage devices, which were (or are) triggered to recover one fragment's worth of data when a respective sync pulse is detected, typically miss data fragments when the sync pulse is not detected for whatever reason.

Various modifications may be made to the embodiment as described above. Thus, for example, the invention may be used with a reference signal comprising any format of fragment or block header instead of the one shown in Figure 3, or indeed comprising any recognizable marker which is known or arranged to occur at a predictable position or positions in recorded data.

## Claims

1. Apparatus for reading and writing data to a storage medium, wherein data is divided into fragments of predetermined length and each fragment comprises a marker, the apparatus comprising:
means for detecting markers;
means for extrapolating from the position of known markers to establish the position of an undetected marker.

2. Apparatus according to claim 1 wherein each data fragment comprises a header containing ancillary information wherein the headers of the data fragments comprise the markers.

3. Apparatus according to any preceding claim wherein the extrapolation is done from the position of already-detected markers to establish the position of subsequently undetected markers.

4. Apparatus according to any preceding claim wherein the extrapolation is done from the position of subsequently-detected markers to establish the position of previously undetected markers.

5. Apparatus according to any preceding claim comprising means for setting a limit on the number of consecutively undetected markers whose position will be established by extrapolating from the position of a known marker.

6. Apparatus for reading and writing data to a storage medium, wherein data is divided into fragments of predetermined length and each fragment comprises a marker, the apparatus comprising:
means for reading data from a data storage medium; and
means for extrapolating from the position of known markers in said data to establish the position of an undetected marker.

7. A method of recovering data from a data storage medium, wherein stored data is arranged as fragments of predetermined length and each fragment comprises a marker, the method comprising:
reading data fragments from a data storage medium; and
where the marker for a fragment is not detected, recovering said fragment by extrapolating from the position of known markers the position of the undetected marker.

8. A method according to claim 7, wherein said data comprises a known number of data fragments each having a pre-determined position.

9. A method according to claim 7 or claim 8, wherein the step of reading comprises detecting a marker and reading a respective data fragment and, where a data fragment is expected but no marker is detected, reading data from the data storage medium from where the fragment data was generally expected and determining the location of the expected but undetected marker by extrapolating from the positions of detected markers.

10. A method according to claim 9, wherein the generally expected location of a fragment marker is after the end of a previous fragment, and data reading continues after the end of the previous fragment irrespective of whether the expected marker is detected.
